# EUROPÄISCHE PATENTSCHRIFT

(11) **EP 1 815 149 B1**
(45) Veröffentlichungstag und Bekanntmachung des Hinweises auf die Patenterteilung: **04.01.2012**
(21) Anmeldenummer: 05810581.8
(22) Anmeldetag: 12.11.2005
(51) Int. Cl.: F15D 1/02, F02C 7/16

(54) **VORRICHTUNG ZUR ENTNAHME UND RÜCKFÜHRUNG VON KÜHLSTRÖMEN**
DEVICE FOR THE WITHDRAWAL AND RECYCLING OF COOLING FLOWS
DISPOSITIF SERVANT A PRELEVER ET RECYCLER DES FLUX DE REFROIDISSEMENT

(30) Priorität: 24.11.2004 DE 102004056704
(43) Veröffentlichungstag der Anmeldung: 08.08.2007
(73) Patentinhaber: MTU Aero Engines GmbH, 80995 München (DE)
(72) Erfinder: GÖTZ, Werner, 85101 Lenting (DE); SCHMIDT, Oliver, 81547 München (DE)
(86) Internationale Anmeldenummer: PCT/DE2005/002042
(87) Internationale Veröffentlichungsnummer: WO 2006/056163

(56) Entgegenhaltungen:
- EP-A- 1 154 135
- DE-A1- 4 336 143
- US-A- 2 463 851
- US-A- 3 623 546
- US-B1- 6 182 435

## Beschreibung

Die Erfindung betrifft eine Vorrichtung zur Entnahme und Rückführung von Kühlströmen, insbesondere zur Entnahme und Rückführung eines Kühlstroms aus Kraftstoff zur Kühlung mindestens eines Anbaugeräts eines Flugtriebwerks. Des weiteren betrifft die Erfindung ein System zur Kühlung von Anbaugeräten eines Flugtriebwerks unter Verwendung einer solchen Vorrichtung.

Anbaugeräte von Flugtriebwerken werden nach dem Stand der Technik dadurch gekühlt, dass durch ein zu kühlendes Anbaugerät ein Kühlstrom aus Kraftstoff geleitet wird. Der Kühlstrom aus Kraftstoff wird im Bereich einer triebwerkseitigen Kraftstoffpumpe aus dem Kraftstoffstrom entnommen und als sogenannter Vorlauf des Kühlstroms durch das zu kühlende Anbaugerät geleitet. Anschließend wird der Kühlstrom als sogenannter Rücklauf wieder in den Kraftstoffstrom zurückgeführt. Hierbei stellt sich das Problem ein, dass der zur Kühlung durch ein Anbaugerät geleitete und als Rücklauf in den Kraftstoffstrom zurückgeführte Kühlstrom zu einer deutlichen Erhöhung der Kraftstofftemperatur im Bereich der triebwerkseitigen Kraftstoffpumpe und damit im Vorlauf des Kühlstroms führt. Dadurch erhöht sich letztendlich die Temperatur des zur Kühlung aus dem Kraftstoffstrom entnommenen Kühlstroms, sodass hierdurch das Kühlpotential des Kühlstroms verringert wird. Unter extremen Betriebsbedingungen kann dann eine ausreichende Kühlung des zu kühlenden Anbaugeräts nicht mehr gewährleistet werden.

Um diesem Problem entgegenzuwirken, wird nach dem Stand der Technik vorgeschlagen, den Kühlstrom bzw. den Vorlauf desselben unmittelbar einem flugzeugseitigen bzw. zellenseitigen Kraftstofftank zu entnehmen. Hierzu muss jedoch eine Schnittstelle zur Flugzeugzelle geschaffen werden, wodurch sich der konstruktive Aufwand und damit letztendlich die Kosten eines flugzeugs erhöhen.

Aus dem Dokument DE 43 36 143 A1 ist eine Anordnung zur Kühlung des Arbeitsnittels in Turbomaschinen sowie zur Kühlung von Bauteilen in Turbomaschinen bekannt, bei der die wärmetauschenden Elemente aus nichtrotierenden Teilen der Turbomaschinenanlage bestehen, und die Wärme von den wärmetauschenden Elementen mittels Kühlmittel in einem offenen oder geschlossenen Kühlmittelkreislauf abgeführt wird. Dabei kann das Kühlmittel pumpengefördert sein und aus dem kalten Kraftstoff bestehen. Gemäß Figur 2 dieses Dokuments wird das Kühlmittel in der Mitte eines Strömungskanals mit Hilfe des Staudrucks entnommen und durch eine Strebe abgeführt. Die Rückführung erfolgt stromabwärts der Abführung gegen den niedrigeren, statischen Druck.

Hiervon ausgehend liegt der vorliegenden Erfindung das Problem zu Grunde eine neuartige Vorrichtung zur Entnahme und Rückführung von Kühlströmen sowie ein neuartiges System zur Kühlung von Anbaugeräten eines Flugtriebwerks zu schaffen.

Dieses Problem wird durch eine Vorrichtung zur Entnahme und Rückführung von Kühlströmen im Sinne von Patentanspruch 1 gelöst. Die erfindungsgemäße Vorrichtung zur Entnahme und Rückführung von Kühlströmen verfügt über ein rohrförmiges, einen Strömungsquerschnitt definierendes Mantelteil, das von einem Hauptstrom, insbesondere einen Kraftstoffstron, durchflossen ist, über ein in etwa mittig im Strömungsquerschnitt bzw. Mantelteil positioniertes, am stromaufwärtigen Ende offen und am stromabwärtigen Ende geschlossen ausgebildetes Entnahmerohr, um aus dem Hauptstrom einen Kühlstrom zu entnehmen, über eine sich in radialer Richtung erstreckende, hohle Strebe, um den mit Hilfe des Entnahmerohrs entnommenen Kühlstrom aus der Vorrichtung abzuleiten und mindestens einer zu kühlenden Einrichtung zuzuleiten, und über eine Rückführöffnung, um den zur Kühlung durch die oder jede Einrichtung geleiteten Kühlstrom in den Hauptstrom zurückzuführen. Dabei erstrecken sich mindestens drei Streben in Richtung auf das mittige Entnahmerohr, wobei eine Strebe die hohle Strebe bildet, und die weiteren Streben der Strömungsführung dienen.

Mithilfe der erfindungsgemäßen Vorrichtung kann eine Vermischung des aus dem Kraftstoffstrom zur Kühlung eines Anbaugeräts entnommenen Vorlaufs des Kühlstroms mit dem nach erfolgter Kühlung des Anbaugeräts zurückgeführten Rücklauf des Kühlstrons vermieden werden. Hierdurch wird eine Temperaturerhöhung des zur Kühlung aus dem Kraftstoffstrom entnommenen Kühlstroms vermieden, sodass auch unter extremen Betriebsbedingungen eine ausreichende Kühlung der Anbaugeräte gewährleistet ist. Auf Schnittstellen zur Flugzeugzelle kann demnach verzichtet werden. Mit der erfindungsgemäßen Vorrichtung ist eine Trennung von Vorlauf und Rücklauf des Kühlstroms aus Kraftstoff innerhalb eines Flugtriebwerks möglich. Durch den Entfall von Schnittstellen zur Flugzeugzelle vereinfacht sich der konstruktive Aufbau, was letztendlich zu einer Kostenreduzierung führt.

Im Bereich des Entnahmerohrs ist der Vorlauf des Kühlstroms aus dem Hauptstrom bei Totaldruck entnehmbar. In Bereich der Rückführöffnung hingegen ist der Rücklauf des Kühlstroms in den Hauptstrom bei statischem Strömungsdruck zurückführbar. Hierdurch wird eine Druckdifferenz zwischen dem Vorlauf und dem Rücklauf des Kühlstroms etabliert, die bei entsprechender Auslegung groß genug ist, um auf einen nach dem Stand der Technik zur Führung des Kühlstroms erforderlichen Ejektor zu verzichten. Hierdurch kann eine weitere Kostenreduzierung erzielt werden.

Nach einer vorteilhaften Weiterbildung der Erfindung ist die Rückführöffnung bezogen auf eine Strömungsrichtung des Hauptstroms stromabwärts des Entnahmerohrs positioniert, insbesondere stromabwärts des stromaufwärtigen, offenen Endes des Entnahmerohrs.

Das System zur Kühlung von Anbaugeräten eines Flugtriebwerks ist in Anspruch 9 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Blockschaltbild eines aus dem Stand der Technik bekannten Systems zur Kühlung von Anbaugeräten eines Flugtriebwerks;
- Fig. 2: ein Blockschaltbild eines erfindungsgemäßen Systems zur Kühlung von Anbaugeräten eines Flugtriebwerks unter Verwendung einer erfindungsgemäßen Vorrichtung zur Entnahme und Rückführung von Kühlströmen;
- Fig. 3: ein Blockschaltbild eines weiteren erfindungsgemäßen Systems zur Kühlung von Anbaugeräten eines Flugtriebwerks unter Verwendung einer erfindungsgemäßen Vorrichtung zur Entnahme und Rückführung von Kühlströmen; und
- Fig. 4: eine schematisierte Darstellung einer erfindungsgemäßen Vorrichtung zur Entnahme und Rückführung von Kühlströmen.

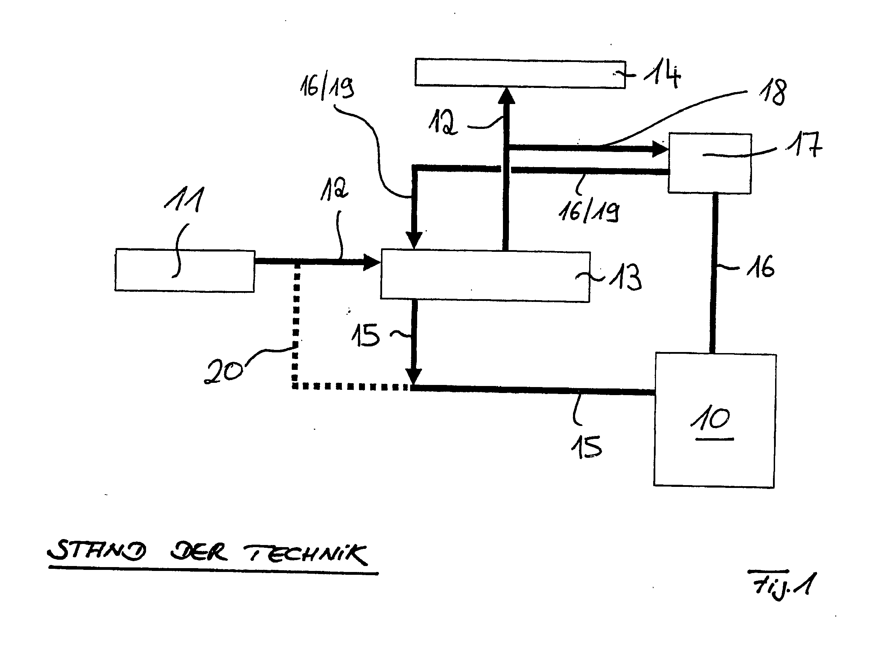

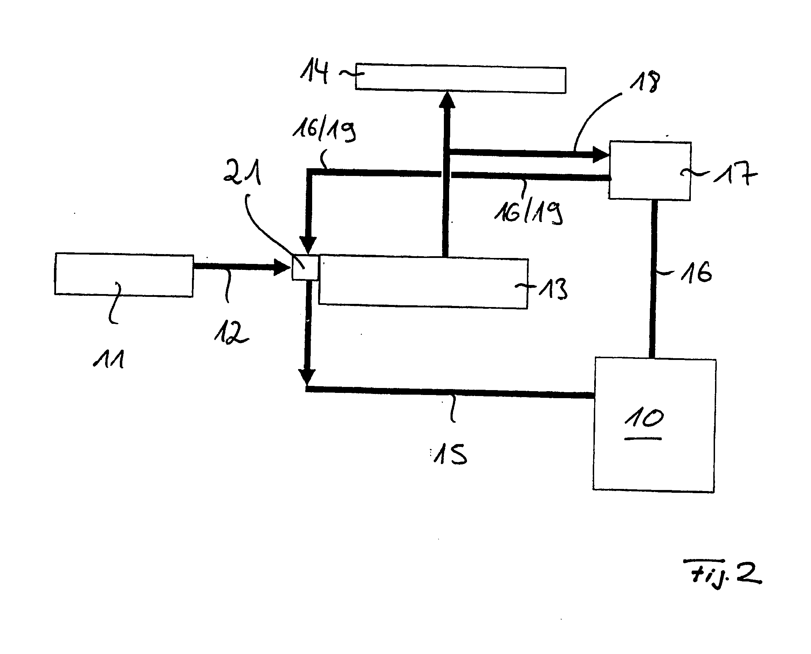

Bevor nachfolgend unter Bezugnahme auf Fig. 2 bis 4 die Erfindung in größerem Detail beschrieben wird, soll vorab unter Bezugnahme auf Fig. 1 ein aus dem Stand der Technik bekanntes System zur Kühlung von triebwerksseitigen Anbaugeräten eines Flugtriebwerks beschrieben werden.

Fig. 1 zeigt schematisiert ein zu kühlendes Anbaugerät 10 eines Flugtriebwerks, wobei zur Kühlung des Anbaugeräts 10 ein Kühlstrom aus Kraftstoff durch das Arbaugerät 10 geleitet wird. Der Kraftstoff wird in einem flugzeugseitigen bzw. zellenseitigen Kraftstofftank 11 bereitgehalten und ausgehend vom Kraftstofftank 11 als Hauptstrom bzw. Kraftstoffstrom 12 einer triebwerksseitigen Kraftstoffpumpe 13 zugeführt. Die triebwerksseitige Kraftstoffpumpe 13 ist als sogenannte Niederdruckstufe ausgeführt und fördert den Kraftstoffstrom 12 in Richtung auf eine weitere, als Hochdruckstufe ausgeführte Kraftstoffpumpe 14, die den Kraftstoff über nicht-dargestellte Einspritzdüsen in eine nicht-dargestellte Brennkammer des Triebwerks einspritzt. Zur Kühlung des Anbaugeräts 10 wird aus dem Kraftstoffstrom 12 im Bereich der triebwerksseitigen Kraftstoffpumpe 13 ein Kühlstrom aus Kraftstoff entnommen; der im Sinne eines Vorlaufs 15 des Kühlstroms dem Anbaugerät 10 zugeführt wird. Der durch das zu kühlende Anbaugerät 10 geleitete Kühlstrom verlässt dasselbe als Rücklauf 16 des Kühlstroms. Nach dem Stand der Technik erfolgt die Entnahme des Vorlaufs 15 des Kühlstroms im Bereich eines Einlaufkanals der triebwerksseitigen Kraftstoffpumpe 13, wobei eine diesbezügliche Entnahmeöffnung in einer Wand des Einlaufkanals der Kraftstoffpumpe 13 integriert ist. Der Rücklauf 16 wird nach dem Stand der Technik ebenfalls über eine in die Wand des Einlaufkanals der Kraftstoffpumpe 13 integrierte Öffnung in den Kraftstoffstrom zurückgeführt, wobei dies in der gleichen Ebene wie die Entnahme des Vorlaufs 15 des Kühlstroms erfolgt. Hierdurch ergibt sich nach dem Stand der Technik eine Vermischung des Vorlaufs 15 des Kühlstroms mit dem Rücklauf 16 desselben und damit eine deutliche Erhöhung der Kraftstofftemperatur im Vorlauf 15 des Kühlstroms. Des weiteren kann die Strömung innerhalb des Einlaufkanals der triebwerksseitigen Kraftstoffpumpe 13 gestört werden. Da nach dem Stand der Technik weiterhin sowohl der Vorlauf 15 als auch der Rücklauf 16 des Kühlstroms bei einem sogenannten statischen Strömungsdruck aus dem Einlaufkanal der Kraftstoffpumpe 13 entnommen bzw. in denselben zurückgeführt werden, besteht nach dem Stand der Technik keine Druckdifferenz zwischen Vorlauf 15 und Rücklauf 16, sodass ein sogenannter Ejektor 17 erforderlich ist, um die Kühlstrom durch das Anbaugerät 10 zu führen bzw. zu treiben. Ein Vorlauf 18 des Ejektors 17 zweigt zwischen der Kraftstoffpumpe 13 und der Kraftstoffpumpe 14 ab, eine Rücklauf 19 desselben fällt mit dem Rücklauf 16 des Kühlstroms zusammen. Wie bereits erwähnt, liegt der Hauptnachteil des aus dem Stand der Technik bekannten Systems zur Kühlung von Anbaugeräten eines Flugtriebwerks darin, dass sich durch die Vermischung des Vorlaufs 15 des Kühlstroms mit dem Rücklauf 16 desselben im Bereich des Einlaufkanals der Kraftstoffpumpe 13 eine Temperaturerhöhung im Vorlauf 15 des Kühlstroms einstellt, die dazu führen kann, dass unter extremen Betriebsbedingungen eine ausreichende Kühlung des Anbaugeräts 10 nicht mehr gewährleistet ist. Daher wird nach dem Stand der Technik vorgeschlagen, über eine Kraftstoffleitung 20 eine Schnittstelle zur Flugzeugzelle einzuführen, um so dem Zulauf 15 des Kühlstroms Kraftstoff mit niedriger Temperatur zuzuführen. Derartige zellenseitige Schnittstellen sind jedoch insgesamt von Nachteil.

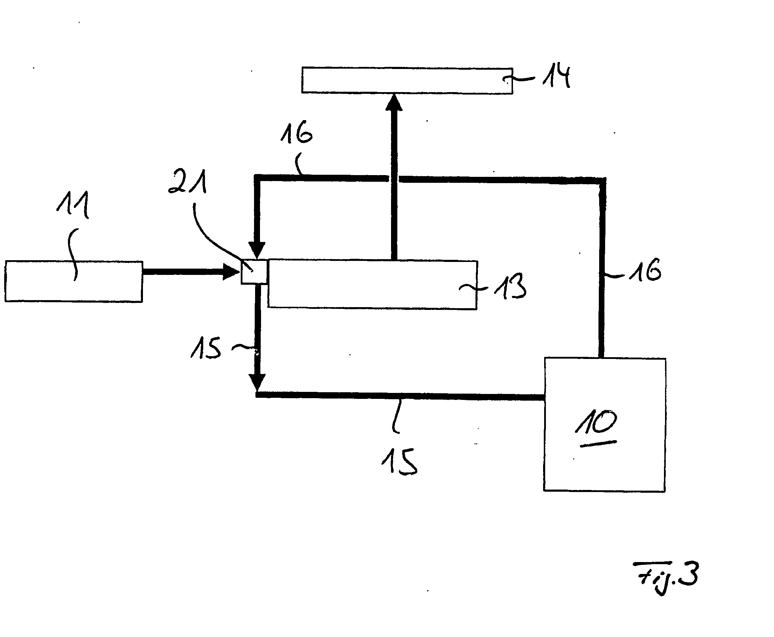

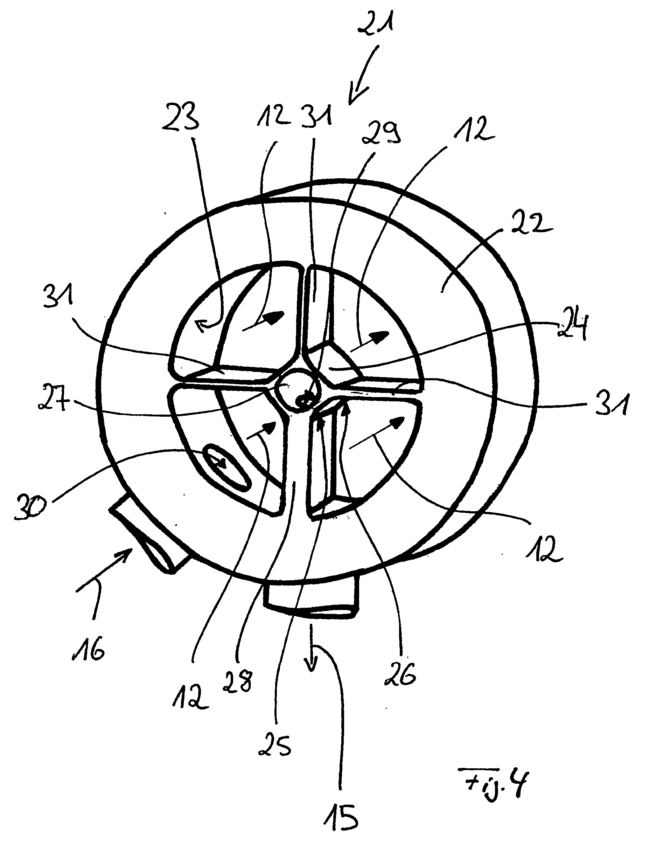

Fig. 2 zeigt ein erfindungsgemäßes System zur Kühlung von Anbaugeräten eines Flugtriebwerks, welches unter Verwendung einer erfindungsgemäßen Vorrichtung 21 zur Entnahme und Rückführung von Kühlströmen eine Schnittstelle zur Flugzeugzelle vermeidet. Wie Fig. 3 zeigt, kann bei entsprechender Auslegung der erfindungsgemäßen Vorrichtung 21 weiterhin auf den Ejektor verzichtet werden. Dies ergibt sich aus der nachfolgenden detaillierten Beschreibung der erfindungsgemäßen Vorrichtung 21, die unter Bezugnahme auf Fig. 4 erfolgt.

Die erfindungsgemäße Vorrichtung zur Entnahme und Rückführung eines Kühlstroms aus einem Hauptstrom bzw. aus einem Kraftstoffstrom verfügt gemäß Fig. 4 über ein rohrförmiges Mantelteil 22, wobei eine Innenwand 23 des Mantelteils 22 einen Strömungskanal bzw. Strömungsquerschnitt für den Kraftstoffstrom 12 definiert. Eine Strömungsrichtung des Kraftstoffstroms 12 ist in Fig. 4 durch Pfeile visualisiert.

Innerhalb des Mantelteils 22 bzw. des durch das Mantelteil 22 definierten Strömungsquerschnitts für den Kraftstoffstrom 12 ist ein Entnahmerohr 24 positioniert, wobei das Entnahmerohr 24 der Entnahme eines Kühlstroms aus dem Kraftstoffstrom 12 dient. Das Entnahmerohr 24 ist in etwa mittig im Strömungsquerschnitt bzw. in dem durch das Mantelteil 22 definierten Strömungskanal für den Kraftstoffstrom 12 positioniert. Das Entnahmerohr 24 ist an einem stromaufwärtigen Ende 25 offen und an einem stromabwärtigen Ende 26 geschlossen ausgebildet. So zeigt Fig. 4 am stromaufwärtigen Ende 25 des Entnahmerohrs 24 eine Öffnung 27 des Entnahmerohrs 24, über die aus dem Kraftstoffstrom 12 der Kühlstrom entnommen werden kann. Über eine sich an das Entnahmerohr 24 anschließende, hohle Strebe 28, die sich in radialer Richtung des durch das Mantelteil 22 definierten Strömungskanals erstreckt, ist der im Bereich des Entnahmerohrs 24 aus dem Kraftstoffstrom 12 entnommene Kühlstrom aus der erfindungsgemäßen Vorrichtung 21 ableitbar und als Vorlauf 15 des Kühlstroms einem zu kühlenden Anbaugerät 10 zuführbar. Die hohle Strebe 28 steht mit Entnahmerohr 24 über eine Öffnung bzw. Bohrung 29 in Verbindung.

Der Rücklauf 16 des Kühlstroms ist über eine Rückführöffnung 30, die in die Innenwand 23 des Mantelteils 22 integriert ist, in den Kraftstoffstrom 12 zurückführbar. Wie Fig. 4 entnommen werden kann, ist dabei die Rückführöffnung 30 stromabwärts des stromaufwärtigen Endes 25 des Entnahmerohrs 24 positioniert. Der Rücklauf 16 des Kühlstroms wird demnach mithilfe der erfindungsgemäßen Vorrichtung 21 in einer anderen Ebene in den Kraftstoffstrom 12 zurückgeführt, wie der Vorlauf 15 des Kühlstroms aus demselben entnommen wird. Hierdurch wird eine Vermischung von Vorlauf 15 und Rücklauf 16 und damit eine Temperaturerhöhung des Kraftstoffs im Vorlauf 15 vermieden. Des weiteren werden die Strömungsverhältnisse im Kraftstoffstrom 12 nicht negativ beeinflusst. Bedingt dadurch, dass die Rückführöffnung 30 stromabwärts des stromaufwärtigen Endes 25 des Entnahmerohrs 24 angeordnet ist, kann eine Temperaturerhöhung im Bereich des Zulaufs 15 des Kühlstroms sicher ausgeschlossen werden.

Wie bereits erwähnt, ist das Entnahmerohr 24 am stromabwärtigen Ende 26 desselben geschlossen ausgeführt. Im Bereich des Entnahmerohrs 24 wird demnach der Vorlauf 15 des Kühlstroms bei Totaldruck entnommen. Im Entnahmerohr 24 herrscht demnach ein Druck, der sich aus dem statischen Strömungsdruck und dem dynamischen Strömungsdruck zusammensetzt. Im Bereich der Rückführöffnung 30 wird hingegen der Rücklauf 16 des Kühlstroms lediglich bei statischem Strömungsdruck in die Hauptströmung 12 zurückgeführt. Bedingt durch die erfindungsgemäße Vorrichtung 21 herrscht demnach zwischen dem Vorlauf 15 des Kühlstroms und dem Rücklauf 16 desselben eine Druckdifferenz, sodass bei entsprechender Auslegung der Vorrichtung 21 gemäß Fig. 3 auf den Ejektor verzichtet werden kann. Der Strömungsquerschnitt der hohlen Strebe 28 wird so ausgelegt, dass ein Druckverlust minimal ist.

Im bevorzugten Ausführungsbeispiel der Fig. 4 erstrecken sich ausgehend von der Innenwand 23 des Mantelteils 22 insgesamt vier Streben in Richtung auf das in etwa in der Mitte des Mantelteils 22 positionierte Entnahmerohr 24. Eine dieser Streben bildet die hohle Strebe 28, die der Führung des Vorlaufs 15 des Kühlstroms dient. Zusätzlich zu dieser hohlen Strebe 28 sind in Fig. 4 drei weitere Streben 31 vorhanden, die der Strömungsführung des Kraftstoffstroms 12 innerhalb des durch das Mantelteils 22 definierten Strömungskanals dienen. Im Sinne der Erfindung liegt auch eine Ausführung mit drei Streben, nämlich einer hohlen Strebe 28 und zwei weiteren Streben 31. Gemäß Fig. 4 ist die Rückführöffnung 23 im Bereich der Innenwand 23 des Mantelteils 22 zwischen zwei Streben positioniert, nämlich zwischen der hohlen Strebe 28 und einer der Streben 31.

Die erfindungsgemäße Vorrichtung 21 kann als separates Bauteil ausgeführt sein und als separates Bauteil im Einlaufkanal der triebwerksseitigen Kraftstoffpumpe 13 positioniert werden. Es ist auch denkbar, dass die erfindungsgemäße Vorrichtung 21 integraler Bestandteils des Einlaufkanals der Kraftstoffpumpe 13 ist.

## Patentansprüche

1. Vorrichtung zur Entnahme und Rückführung von Kühlströmen, insbesondere zur Entnahme und Rückführung eines Kühlstroms aus Kraftstoff zur Kühlung mindestens eines Anbaugeräts eines Flugtriebwerks, mit einem rohrförmigen, einen Strömungsquerschnitt definierenden Mantelteil (22), welches von einem Hauptstrom, insbesondere einem Kraftstoffstrom, im Betriebszustand durchflossen, ist, mit einem in etwa mittig im Strömungsquerschnitt bzw. Mantelteil positionierten, am stromaufwärtigen Ende (25) offen und am stromabwärtigen Ende (26) geschlossen ausgebildetem Entnahmerohr (24), um aus dem Hauptstrom einen Kühlstrom zu entnehmen, mit einer sich in radialer Richtung erstreckenden, hohlen Strebe (28), um den mit Hilfe des Entnahmerohrs (24) entnommenen Kühlstrom, im Betriebszustand, aus der Vorrichtung abzuleiten und mindestens einer zu kühlenden Einrichtung zuzuleiten, und mit einer Rückführöffnung (30), um den zur Kühlung durch die oder jede Einrichtung geleiteten Kühlstrom in den Hauptstrom zurückzuführen,
**dadurch gekennzeichnet,**
**dass** sich innerhalb des Strömungskanals ausgehend vom Mantelteil (22) mindestens drei Streben in Richtung auf das in etwa mittig im Mantelteil (22) positionierte Entnahmerohr (24) erstrecken, wobei eine der Streben die hohle Strebe (28) bildet, die der Abführung des aus dem Hauptstrom entnommenen Kühlstroms dient, und wobei die anderen Streben (31) der Strömungsführung innerhalb des vom Mantelteil (22) definierten Strömungskanals dienen.

2. Vorrichtung nach Anspruch 1,
**dadurch gekennzeichnet,**
**dass** im Bereich des Entnahmerohrs (24) der Kühlstrom dem Hauptstrom bei Totaldruck, als über der Summe aus statischem und dynamischen Strömungsdruck, entnehmbar ist.

3. Vorrichtung nach Anspruch 1 oder 2,
**dadurch gekennzeichnet,**
**dass** im Bereich der Rückführöffnung (30) der Kühlstrom in den Hauptstrom bei statischem Strömungsdruck zurückführbar ist.

4. Vorrichtung nach einem der Ansprüche 1 bis 3,
**dadurch gekennzeichnet,**
**dass** die Rückführöffnung bezogen auf eine Strömungsrichtung des Hauptstroms stromabwärts des Entnahmerohrs (24), insbesondere des stromaufwärtigen Endes des Entnahmerohrs, positioniert ist.

5. Vorrichtung nach einem der Ansprüche 1 bis 4,
**dadurch gekennzeichnet,**
**dass** die Rückführöffnung in eine Wand (23) des Mantelteils (22) integriert ist.

6. Vorrichtung nach Anspruch 5,
**dadurch gekennzeichnet,**
**dass** die Rückführöffnung (30) im Bereich des Mantelteils (22) zwischen zwei Streben positioniert ist.

7. Vorrichtung nach einem der Ansprüche 1 bis 6,
**dadurch gekennzeichnet,**
**dass** dieselbe als separates Bauteil ausgeführt und in einen Einlaufkanal einer Kraftstoffpumpe integrierbar ist.

8. Vorrichtung nach einem der Ansprüche 1 bis 6,
**dadurch gekennzeichnet,**
**dass** dieselbe integraler Bestandteil eines Einlaufkanals einer Kraftstoffpumpe ist.

9. System zur Kühlung von Anbaugeräten eines Flugtriebwerks mit Kraftstoff, mit einer triebwerksseitigen Kraftstoffpumpe (13), der über einen Kraftstoffkanal von einem flugzeugseitigen Kraftstofftank (11) ein Kraftstoffstrom (12) zuführbar ist, wobei im Bereich eines Einlaufkanals der triebwerksseitigen Kraftstoffpumpe (13) aus dem Kraftstoffstrom (12) ein Kühlstrom aus Kraftstoff entnehmbar ist, wobei der Kühlstrom mindestens einem zu kühlenden Anbaugerät (10) als Vorlauf (15) zuführbar ist, und wobei der durch das oder jedes Anbaugerät (10) geleitete Kühlstrom in den Kraftstoffstrom als Rücklauf (16) zurückführbar ist,
**gekennzeichnet durch**
eine im Bereich des Einlaufkanals der triebwerksseitigen Kraftstoffpumpe (13) positionierte Vorrichtung (21) zur Entnahme und Rückführung von Kühlströmen nach einem der Ansprüche 1 bis 8.

## Claims

1. A device for withdrawing and recycling cooling flows, in particular for withdrawing and recycling a cooling flow of fuel for cooling at least one add-on unit of an aircraft engine, having a tubular casing portion (22) which defines a flow cross-section and through which a main flow, in particular a flow of fuel, flows in the operating state, having a withdrawal pipe (24), positioned substantially centrally in the flow cross-section or casing portion and formed so as to be open at the upstream end (25) and closed at the downstream end (26), in order to withdraw a cooling flow from the main flow, having a hollow strut (28) extending in the radial direction in order to divert the cooling flow, withdrawn with the aid of the withdrawal pipe (24), in the operating state out of the device and to feed it at least to a facility that is to be cooled, and having a recycling opening (30) in order to return the cooling flow directed for cooling through the or each facility into the main flow,
**characterised in that**
within the flow channel starting from the casing portion (22) at least three struts extend in the direction of the withdrawal pipe (24) that is positioned substantially centrally in the casing portion (22), wherein one of the struts constitutes the hollow strut (28) that serves to remove the cooling flow withdrawn from the main flow, and wherein the other struts (31) serve to guide flow within the flow channel defined by the casing portion (22).

2. A device according to claim 1,
**characterised in that**
in the region of the withdrawal pipe (24) the cooling flow can be withdrawn from the main flow at total pressure, as [above] the sum of static and dynamic flow pressure.

3. A device according to claim 1 or 2,
**characterised in that**
in the region of the recycling opening (30) the cooling flow can be returned into the main flow at static flow pressure.

4. A device according to one of claims 1 to 3, **characterised in that**
in relation to a flow direction of the main flow the recycling opening is positioned downstream of the withdrawal pipe (24), in particular of the upstream end of the withdrawal pipe.

5. A device according to one of claims 1 to 4, **characterised in that**
the recycling opening is integrated into a wall (23) of the casing portion (22).

6. A device according to claim 5,
**characterised in that**
the recycling opening (30) is positioned in the region of the casing portion (22) between two struts.

7. A device according to one of claims 1 to 6,
**characterised in that**
the same is constructed as a separate component part and can be integrated into an inlet channel of a fuel pump.

8. A device according to one of claims 1 to 6,
**characterised in that**
the same is an integral constituent part of an inlet channel of a fuel pump.

9. A system for cooling add-on units of an aircraft engine with fuel, having a fuel pump (13) on the engine side to which a fuel flow (12) can be supplied by way of a fuel channel from an aircraft-side fuel tank (11), wherein in the region of an inlet channel of the engine-side fuel pump (13) a cooling flow of fuel can be withdrawn from the fuel flow (12), wherein the cooling flow can be supplied as an advance (15) at least to an add-on unit (10) that is to be cooled, and wherein the cooling flow that is directed through the or each add-on unit (10) can be returned as a return (16) to the fuel flow,
**characterised by**
a device (21) that is positioned in the region of the inlet channel of the engine-side fuel pump (13) for withdrawing and recycling cooling flows according to one of claims 1 to 8.

## Revendications

1. Dispositif pour prélever et recycler des flux de refroidissement, en particulier pour prélever et recycler un flux de refroidissement constitué de carburant pour le refroidissement d'au moins un élément rapporté d'un groupe motopropulseur, avec une partie d'enveloppe tubulaire (22) définissant une section transversale d'écoulement, qui est parcourue en situation de fonctionnement par un flux principal, en particulier un flux de carburant, avec un tube de prélèvement (24) positionné sensiblement au milieu de la section transversale d'écoulement ou de la partie d'enveloppe, ouvert à son extrémité amont (25) et fermé à son extrémité aval (26), pour prélever un flux de refroidissement hors du flux principal, avec une entretoise creuse (28) s'étendant en direction radiale pour dévier hors du dispositif en situation de fonctionnement le flux de refroidissement prélevé à l'aide du tube de prélèvement (24) et le conduire au moins à un équipement à refroidir, et avec une ouverture de recyclage (30) pour renvoyer dans le flux principal le flux de refroidissement conduit pour le refroidissement à travers le ou chaque équipement, **caractérisé en ce qu'**au moins trois entretoises s'étendent à l'intérieur du canal d'écoulement à partir de la partie d'enveloppe (22) en direction du tube de prélèvement (24) positionné sensiblement au milieu de la partie d'enveloppe (22), dans lequel une des entretoises forme l'entretoise creuse (28) qui sert pour l'évacuation du flux de refroidissement prélevé hors du flux principal et dans lequel les autres entretoises (31) servent pour le guidage de l'écoulement à l'intérieur du canal d'écoulement défini par la partie d'enveloppe (22).

2. Dispositif selon la revendication 1, **caractérisé en ce que** le flux de refroidissement peut être prélevé hors du flux principal dans la région du tube de prélèvement (24) à la pression totale, formée par la somme de la pression d'écoulement statique et dynamique.

3. Dispositif selon la revendication 1 ou 2, **caractérisé en ce que** le flux de refroidissement peut être recyclé dans le flux principal à la pression d'écoulement statique dans la région de l'ouverture de recyclage (30).

4. Dispositif selon l'une quelconque des revendications 1 à 3, **caractérisé en ce que** l'ouverture de recyclage est positionnée en aval du tube de prélèvement (24), en particulier en aval de l'extrémité amont du tube de prélèvement, par rapport à une direction d'écoulement du flux principal.

5. Dispositif selon l'une quelconque des revendications 1 à 4, **caractérisé en ce que** l'ouverture de recyclage est intégrée dans une paroi (23) de la partie d'enveloppe (22).

6. Dispositif selon la revendication 5, **caractérisé en ce que** l'ouverture de recyclage (30) est positionnée entre deux entretoises dans la région de la partie d'enveloppe (22).

7. Dispositif selon l'une quelconque des revendications 1 à 6, **caractérisé en ce que** celui-ci est réalisé sous la forme d'un composant séparé et peut être intégré dans un canal d'admission d'une pompe à carburant.

8. Dispositif selon l'une quelconque des revendications 1 à 6, **caractérisé en ce que** celui-ci est un composant intégral d'un canal d'admission d'une pompe à carburant.

9. Système pour le refroidissement d'éléments rapportés d'un groupe motopropulseur avec du carburant, avec une pompe à carburant (13) du côté du groupe motopropulseur, à laquelle un flux de carburant (12) peut être envoyé, via un canal de carburant, à partir d'un réservoir de carburant (11) du côté de l'avion, dans lequel un flux de refroidissement constitué de carburant peut être prélevé hors du flux de carburant (12) dans la région d'un canal d'admission de la pompe à carburant (13) du côté du groupe motopropulseur, dans lequel le flux de refroidissement peut être envoyé comme courant d'arrivée (15) à au moins un élément rapporté à refroidir (10) et dans lequel le flux de refroidissement conduit à travers le ou chaque élément rapporté (10) peut être recyclé comme courant de retour (16) dans le flux de carburant, **caractérisé par** un dispositif (21) pour prélever et recycler des flux de refroidissement selon l'une quelconque des revendications 1 à 8, positionné dans la région du canal d'admission de la pompe à carburant (13) du côté du groupe motopropulseur.
